# EUROPÄISCHE PATENTSCHRIFT

(11) **EP 1 627 114 B1**
(45) Veröffentlichungstag und Bekanntmachung des Hinweises auf die Patenterteilung: **05.09.2007**
(21) Anmeldenummer: 04738529.9
(22) Anmeldetag: 21.05.2004
(51) Int. Cl.: E02F 5/28, G01C 13/00

(54) **VERFAHREN ZUR AUTOMATISCHEN EINSTELLUNG VON GELÄNDEPROFILEN IM BEREICH VON GEWÄSSERN**
METHOD FOR AUTOMATICALLY PROFILING GROUND IN WATERS
PROCEDE DE REGLAGE AUTOMATIQUE DE PROFILS DE TERRAIN AU NIVEAU DE PLANS D'EAU

(30) Priorität: 28.05.2003 DE 10324169
(43) Veröffentlichungstag der Anmeldung: 22.02.2006
(73) Patentinhaber: Team Technology, Engineering & Marketing GmbH, 45701 Herten (DE)
(72) Erfinder: BLUME, Dirk, 59425 Unna (DE)
(74) Vertreter: Spannagel, Hans-Achim
(86) Internationale Anmeldenummer: PCT/DE2004/001059
(87) Internationale Veröffentlichungsnummer: WO 2004/106643

(56) Entgegenhaltungen:
- DE-A- 19 942 472
- DE KEIZER CEES, VAN DER KLUGT PETER: "A New Generation DP/DT System for Dredging Vessels" DYNAMIC POSITIONING COMITTEE, 18. Oktober 2000 (2000-10-18), XP002306423 HOUSTON
- DANIELS ALBERT: "Saugbaggerautomatisierung Möglichkeiten, Grenzen, Zukunft" AUFBEREITUNGSTECHNIK, Bd. 41, Nr. 3, 21. Januar 2000 (2000-01-21), Seiten 103-109, XP002306424
- IHC SYSTEMS: "IHC Vacuum and Pressure Indicators" IHC SYSTEMS, [Online] 1999, XP002306425 [gefunden am 2004-11-17]
- MALLEE G.T.: "Dredge Track Presentation System" IHC SYSTEMS, [Online] 13. September 2000 (2000-09-13), XP002306426 [gefunden am 2004-11-17]

## Beschreibung

Die Erfindung betrifft ein Verfahren zur automatischen Erzeugung von Geländeprofilen im Bereich einer abzuteufenden Kiesgrube, unter Einsatz schwimmender Fördergeräte.

Der DE-A 199 42 472 ist ein Verfahren zur kartographisch kontrollierten Abteufung von Gewässern mittels schwimmender Fördergeräte zu entnehmen. Dabei wird aus einer bestehenden Gewässerflächenkarte mindestens eine Basiskarte auf Grundlage einer Raster- oder Vektorkarte erzeugt, indem das Gewässer mittels geeigneter Einrichtungen zur Erstellung eines 3-D-Tiefenprofils abgetastet wird. Die Position und die Ausrichtung des schwimmenden Fördergerätes, typischerweise eines Schwimmbaggers, wird ermittelt und in der Basiskarte eingetragen. Die so erstellte Basiskarte wird im Rechner des Systems hinterlegt. Im Nahbereich des Fördergerätes werden der Gewässergrund und ggf. die Böschung in kurzen Intervallen abgetastet. Die dadurch gewonnenen Daten bilden ein Tiefenprofil. Aus dem Tiefenprofil wird eine aktualisierte Basiskarte erstellt. Diejenigen Kartenelemente, bei denen sich die Tiefenlinien aufgrund der Abteufung des Gewässerbodens verändert haben, werden angepasst, wobei das Tiefenprofil vorzugsweise als Farbverlaufsprofil hergestellt wird.

Der Zeitschriftartikel "Saugbaggerautomatisierung - Möglichkeiten, Grenzen, Zukunft", Aufbereitungstechnik 41 (2000/Nr. 3, S. 103-109) setzt sich mit heutigen Gewinnungstechniken auseinander, wobei Ziele und Umsetzungen der Automatisierung beschrieben werden. Zum Thema "realisierte Verfahren" wird auf folgende Punkte hingewiesen:
- Erfassung aller für den Baggerbetrieb erforderlichen Messdaten
- Übernahme des Pumpmanagements
- Koordination der baggertechnisch relevanten Daten einer GPS-Sonar Anlage mit der Baggerautomatik
- Fernüberwachung und Steuerung des Baggerschiffes von einer Fernwarte aus
- Protokollierung aller Betriebsdaten des Baggers

Schwimmende Fördergeräte, insbesondere Schwimmbagger, können unterschiedliche Gewinnungsorgane haben. Hierbei handelt es sich vorzugsweise um Greifer, Schneidräder, Eimerketten oder Saugrohre, wobei die am Gewässerboden befindlichen Materialschichten, wie z.B. Schlick oder Kies, durch das jeweilige Gewinnungsorgan aufgenommen und ihrer weiteren Bestimmung zugeführt werden.

Zum Betreiben eines schwimmenden Fördergerätes, insbesondere zur Positionsveränderung, wird Bedienpersonal benötigt. Dieses verändert die Zugseile in ihrer Länge, so dass das schwimmende Fördergerät von einer ersten Gewinnungsposition in eine weitere Gewinnungsposition überführt wird.

Die Personalkosten des Bedienpersonals sind naturgemäß ein substanzieller Teil der Betriebskosten. Vor allem aber muss für einen kontinuierlichen und optimalen Betrieb des Fördergerätes eine Vielzahl von Parametern (Gewässertiefe an der Förderstelle, Dichte und Körnung des Fördergutes, Wassertemperatur, bei Saugbaggern, Druck im Saugrohr, usw.) beachtet und in Entscheidungen zur Steuerung des Gerätes umgesetzt werden. Die gleichzeitige Beachtung aller hierbei wesentlichen Einflussgrößen und die Umsetzung in optimierende Steuerbefehle überfordert das Vermögen des Bedienpersonals und lässt sich nur durch moderne Steuerungs- und Rechnertechnik lösen.

Es ist das Ziel der Erfindung, diese Einsicht umzusetzen, um einen automatischen, weitgehend mannlosen und vor allem kontinuierlichen Betrieb mit verbesserter Förderleistung, höherer Abbaugenauigkeit und verringerten Betriebskosten zu bewirken.

Dieses Ziel wird erreicht durch ein Verfahren zur automatischen Erzeugung von Geländeprofilen im Bereich einer abzuteufenden Kiesgrube, unter Einsatz schwimmender Fördergeräte, indem aus einer bestehenden Gewässerflächenkarte mindestens eine Basiskarte erzeugt wird, das Gewässer mittels geeigneter Einrichtungen zur Erstellung eines Tiefenprofils abgetastet, die Position sowie Ausrichtung des Fördergerätes ermittelt, eine zyklische Aktualisierung der Gewässer-Ist-Tiefe und ein Vergleich mit einem Soll-Tiefenprofil herbeigeführt werden, wobei vorgebbare Parameter im Bereich des Gewinnungsorgans des Fördergerätes im Verlauf eines schichtweisen Abteufvorganges gemessen und einer Steuerung zugeführt werden und bei Abweichungen von den Parametern eine Positionsveränderung des Fördergreätes durchgeführt wird.

Vorteilhafte Weiterbildungen des erfindungsgemäßen Verfahrens sind den Unteransprüchen zu entnehmen.

Je nach zu förderndem Gut und Gewinnungstiefe können Parameter wie der Unterdruck, beispielsweise zwischen 0,5 und 0,8 bar, einen entsprechenden Schwellenwert darstellen. Wird dieser Wert beispielsweise dadurch unterschritten, dass kein Gemisch, sondern nur noch Wasser gefördert wird, ist dies ein mögliches Kriterium dafür, dass eine Positionsveränderung des Fördergerätes herbeigeführt werden muss. Das Gewinnungsorgan hat dann nämlich entweder eine Tiefe erreicht, bei der es wegen der Beachtung einer vorgegebenen Solltiefe nicht weiter abgesenkt werden darf, oder es befindet sich in seiner mechanisch maximal möglichen Absenktiefe. Ein weiterer Parameter könnte beispielsweise das Kennfeld der zum Einsatz gelangenden Pumpe, insbesondere Vakuumpumpe, sein und zwar in Bezug auf deren Drehzahl, Leistung und Wirkungsgrad. Ist z. B. der Aufnahmebereich des Gewinnungsorgans verstopft, kann es zur Kavitation der Pumpe sowie zu deren Ausfall führen.

Auch die Fließgeschwindigkeit des Wasser-Feststoff-Gemisches nach Pumpendurchlauf, dass heißt im nachfolgenden Rohrleitungsbereich, ist ein weiterer Parameter.

Anhand der Überschreitung oder Unterschreitung vorgegebener Grenzwerte der maßgebenden Parameter erkennt die Steuerung, dass die Förderung an der gegebenen Position zu beenden ist. Die Position des Fördergerätes wird durch die Steuerung selbsttätig durch Einwirkung auf die Verholwinden verändert.

Bei der Ortsveränderung bringt die Steuerung das schwimmende Fördergerät in eine neue Abbauposition mit einem gemäß der Basiskarte abbauwürdigem Materialvorkommen.

Durch Einstellung einer bestimmten maximalen Abbautiefe wird ein betriebswirtlich oft sinnvolles schichtweises Abtragen des Fördermaterials ermöglicht. Außerdem erkennt das System Abbauhindernisse, die auf der Basiskarte eingetragen sind, wie z. B. Lehmbänke. Solche Hindernisse werden umfahren. Und schließlich ist es auch möglich, in die Automatik der Ortsveränderung durch gezielte Sollvorgaben einzugreifen.

Abweichend von den herkömmlichen Verfahren gestattet es der Erfindungsgegenstand darüber hinaus, je nach den Anforderung der Genehmigungsbehörden und der Betreiber komplexe harmonische Geländeprofile zu erzeugen. Dieser Fähigkeit kommt eine besondere Bedeutung zu, weil jedenfalls im Bereich des Nassabbaus von Kies und Sand zunehmend ökologische Anforderungen mit Flachwasserzonen als Laich- oder Brutgebiete und dgl. gefordert werden.

## Patentansprüche

1. Verfahren zur automatischen Erzeugung von Geländeprofilen im Bereich einer abzuteufenden Kiesgrube, unter Einsatz schwimmender Fördergeräte, indem aus einer bestehenden Gewässerflächenkarte mindestens eine Basiskarte erzeugt wird, das Gewässer mittels geeigneter Einrichtungen zur Erstellung eines Tiefenprofils abgetastet, die Position sowie Ausrichtung des Fördergerätes ermittelt, eine zyklische Aktualisierung der Gewässer-Ist-Tiefe und ein Vergleich mit einem Soll-Tiefenprofil herbeigeführt werden, wobei vorgebbare Parameter im Bereich des Gewinnungsorgans des Fördergerätes im Verlauf eines schichtweisen Abteufvorganges gemessen und einer Steuerung zugeführt werden und bei Abweichungen von den Parametern eine Positionsveränderung des Fördergerätes durchgeführt wird.

2. Verfahren nach Anspruch 1, **dadurch gekennzeichnet, dass** parallel eine Tiefenregulierung des Gewinnungsorgans des Fördergerätes durchgeführt wird.

3. Verfahren nach Anspruch 1 oder 2, **dadurch gekennzeichnet, dass** in Abhängigkeit des zum Einsatz gelangenden Gewinnungsorgans einzelne oder mehrere Parameter, wie die Abteuftiefe, das Vakuum, die Pumpenkennlinie, die Fließgeschwindigkeit des Wasser-Feststoff-Gemisches oder dergleichen als Kriterium für die Positionsveränderung des Fördergerätes herangezogen werden.

4. Verfahren nach einer der Ansprüche 1 bis 3, **dadurch gekennzeichnet, dass** bei Einsatz eines Saugrohres als Gewinnungsorgan das im Gewinnungsbereich anstehende Vakuum, insbesondere innerhalb des Saugrohres, gemessen und bei Abweichen von einem vorgegebenen Unterdruck die Position des Fördergerätes verändert wird.

5. Verfahren nach einem der Ansprüche 1 bis 4, **dadurch gekennzeichnet, dass** das Fördergerät über die elektronische Steuerung nach Auswertung der Messwerte und Feststellung von Parameterabweichungen eine automatische Positionsänderung des Fördergerätes durchführt.

6. Verfahren nach einem der Ansprüche 1 bis 5, **dadurch gekennzeichnet, dass** vor der Positionsänderung des Fördergerätes das Gewinnungsorgan aus der Förderstellung in eine Nicht-Förderstellung übergeführt wird.

7. Verfahren nach einem der Ansprüche 1 bis 6, **dadurch gekennzeichnet, dass** die Steuerung auf im Bereich des Fördergerätes vorgesehene Winden einwirkt, wobei die Positionsänderung des Fördergerätes unter Einbeziehung der verfügbaren Daten in eine elektronisch zu markierende neue Position herbeigeführt und das Fördergerät in diese Position gebracht und gehalten wird, wobei das jeweilige Gewinnungsorgan dann wieder in eine vorgebbare Förderstellung abgesenkt wird.

## Claims

1. A method for the automatic production of ground profiles in a gravel pit to be sunk, by means of floating conveying devices, in that at least one base map is produced from an existing water area map, the water is scanned by means of suitable devices for obtaining a depth profile, the position as well as the orientation of the conveying device is determined, a cyclic updating of the actual water depth and a comparison with a desired depth profile are realized, wherein pre-determinable parameters of the extraction means of the conveying device are measured in the course of a layer-wise sinking operation and supplied to a control unit, and that in case of divergences from the parameters, the position of the conveying device will be changed.

2. A method according to claim 1, **characterized in that** a depth regulation of the extraction means of the conveying device is carried out in parallel.

3. A method according to claim 1 or 2, **characterized in that** depending on the used extraction means, single or several parameters, such as the sinking depth, the vacuum, the characteristic curve of the pump, the flow rate of the water-solid-mixture or the like, are taken as criterion for the change of position of the conveying device.

4. A method according to one of the claims 1 through 3, **characterized in that** if a suction pipe is used as extraction means, the vacuum present in the extraction area, in particular inside the suction pipe, will be measured and in case of divergences from a pre-determined negative pressure, the position of the conveying device will be changed.

5. A method according to one of the claims 1 through 4, **characterized in that** the conveying device automatically changes the position of the conveying device by means of the electronic control unit after evaluation of the measuring values and detection of parameter deviations.

6. A method according to one of the claims 1 through 5, **characterized in that** the extraction means is brought from an extraction position into a non-extraction position before changing the position of the conveying device.

7. A method according to one of the claims 1 through 6, **characterized in that** the control unit acts upon winches provided in the conveying device, wherein the position of the conveying device will be changed in consideration of the available data into a new position to be electronically marked and the conveying device will be brought and kept in this position, wherein the respective extraction means will then be lowered again into a pre-determinable extraction position.

## Revendications

1. Procédé de réglage automatique de profils de terrain au niveau d'une gravière à creuser en utilisant des appareils de manutention flottants en ce qu'on produit au moins une carte de base à partir d'une carte de plans d'eau existante, on balaye les eaux par moyen des dispositifs pour déterminer un profil de profondeur, on détermine la position ainsi que l'orientation de l'appareil de manutention, on réalise une actualisation cyclique de la profondeur réelle des eaux et une comparaison avec un profil de profondeur de consigne, des paramètres à prédéterminer au niveau de l'organe d'extraction de l'appareil de manutention étant mesurés au cours d'une opération de creusement couche par couche et étant transmis à un réglage automatique et en cas de divergences des paramètres on change la position de l'appareil de manutention.

2. Procédé selon la revendication 1, **caractérisé en ce qu'**on réalise en parallèle une régulation de profondeur de l'organe d'extraction de l'appareil de manutention.

3. Procédé selon la revendication 1 ou 2, **caractérisé en ce qu'**en fonction de l'organe d'extraction utilisé des paramètres particuliers ou plusieurs paramètres, tels que la profondeur de creusement, le vide, la courbe caractéristique de la pompe, le taux de fluage du mélange des eaux et des matières solides ou similaire sont utilisés comme critère pour le changement de position de l'appareil de manutention.

4. Procédé selon l'une des revendications 1 à 3, **caractérisé en ce que** si un tuyau d'aspiration est utilisé comme organe d'extraction, le vide créé dans la zone d'extraction, en particulier à l'intérieur du tuyau d'aspiration, est mesuré et en cas de divergence par rapport à une dépression prédéterminée la position de l'appareil de manutention est changée.

5. Procédé selon l'une des revendications 1 à 4, **caractérisé en ce qu'**après l'évaluation des valeurs mesurées et la détermination des divergences de paramètres, l'appareil de manutention réalise un changement de position automatique de l'appareil de manutention par moyen du réglage automatique et électronique.

6. Procédé selon l'une des revendications 1 à 5, **caractérisé en ce que** l'organe d'extraction est transféré de la position d'extraction à une position sans extraction avant de changer la position de l'appareil de manutention.

7. Procédé selon l'une des revendications 1 à 6, **caractérisé en ce que** le réglage automatique actionne sur des treuils prévus au niveau de l'appareil de manutention, la position de l'appareil de manutention étant changée en considération des données disponibles dans une nouvelle position à marquer électroniquement et l'appareil de manutention étant amené dans cette position et y retenu, l'organe d'extraction respectif puis étant descendu de nouveau dans une position d'extraction prédéterminable.
